(19) **Europäisches Patentamt**
**European Patent Office**
**Office européen des brevets**

(11) Veröffentlichungsnummer : **0 111 896**
**B1**

(12) **EUROPÄISCHE PATENTSCHRIFT**

(45) Veröffentlichungstag der Patentschrift : **04.03.87**

(51) Int. Cl.[4] : **C 08 L 27/06**, C 08 K 5/37

(21) Anmeldenummer : **83112608.1**

(22) Anmeldetag : **15.12.83**

(54) **Stabilisierte Polyvinylchlorid-Formmassen und Stabilisatoren.**

(30) Priorität : **23.12.82 DE 3247736**

(43) Veröffentlichungstag der Anmeldung : **27.06.84 Patentblatt 84/26**

(45) Bekanntmachung des Hinweises auf die Patenterteilung : **04.03.87 Patentblatt 87/10**

(84) Benannte Vertragsstaaten : **AT BE CH DE FR GB IT LI NL**

(56) Entgegenhaltungen :
**EP-A- 0 022 047**
**EP-A- 0 050 070**
**EP-A- 0 090 748**
**US-A- 3 067 166**
**CHEMICAL ABSTRACTS, Band 95, Nr. 20, 16. November 1981, Seite 46, Nr. 170406r, Columbus, Ohio, US**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Upadek, Horst, Dr.**
**Kempenweg 18A**
**D-4006 Erkrath (DE)**
Erfinder : **Erwied, Werner, Dr.**
**Senliser Strasse 22**
**D-4018 Langenfeld (DE)**
Erfinder : **Wegemund, Bernd, Dr.**
**Händelweg 3**
**D-5657 Haan 1 (DE)**

**EP 0 111 896 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft stabilisierte thermoplastische Formmassen auf Basis von Polyvinylchlorid oder im wesentlichen Vinylchlorid enthaltenden Polymerisaten.

Bei der formgebenden Verarbeitung von thermoplastischen Polymerisaten zu Rohren, Flaschen, Profilen, Folien und dergleichen, beispielsweise durch Extrudieren, Spritzgießen, Blasen, Tiefziehen und Kalandrieren, kann bei den dabei auftretenden hohen Temperaturen leicht ein Abbau des Kunststoffs eintreten. Dies führt zu unerwünschten Verfärbungen und zu einer Minderung der mechanischen Eigenschaften. Aus diesem Grund setzt man den Polymerisaten vor der Warmverformung Stabilisatoren zu, die einem solchen Abbau entgegenwirken. Für Polyvinylchlorid und im wesentlichen Vinylchlorid enthaltende Mischpolymerisate setzt man als Wärmestabilisatoren vor allem anorganische und organische Bleisalze, organische Antimonverbindungen, Organozinnverbindungen sowie Cadmium-/Bariumcarboxylate und -phenolate ein. Die genannten Metallverbindungen werden gewöhnlich als Primärstabilisatoren bezeichnet ; zur Verbesserung ihrer Wirksamkeit setzt man ihnen häufig Sekundär- oder Costabilisatoren zu. Weitere Einzelheiten über die für Vinylchloridpolymerisate gebräuchlichen Wärmestabilisatoren können der einschlägigen Literatur entnommen werden, beispielsweise der Encyclopedia of Polymer Science and Technology, Band 12, New York, London, Sydney, Toronto 1970, Seiten 737 bis 768.

Die genannten Stabilisatoren zeigen in der Praxis eine durchaus befriedigende Wirkung. Gegen den Einsatz von Blei- Antimon- und Cadmiumverbindungen bestehen jedoch gewisse Bedenken, insbesondere solche toxikologischer Art. Eine Reihe von Organozinnverbindungen ist toxikologisch unbedenklich, ihrem breiten Einsatz steht jedoch ihr hoher Preis entgegen. Aus diesem Grunde sucht man schon seit langem, diese Verbindungen durch weniger bedenkliche und preisgünstigere Substanzen zu ersetzen. In diesem Zusammenhang ist man dazu übergegangen, als Primärstabilisatoren fettsaure Salze, aromatische Carboxylate und Phenolate der Metalle Calcium, Barium, Zink und Aluminium zu verwenden, die gegebenenfalls durch Costabilisatoren wie z. B. organische Phosphite, Iminoverbindungen, Epoxyverbindungen, mehrwertige Alkohole oder 1,3-Diketone ergänzt werden. Diese neueren Stabilisatorsysteme sind jedoch in mehr oder minder großem Maße mit dem Mangel behaftet, daß sie den zu stabilisierenden Formmassen eine zu geringe Anfangsstabilität und/oder eine zu geringe Langzeitstabilität verleihen. Es besteht daner ein Bedürfnis nach Substanzen, mit deren Hilfe sich die Anfangs- und/oder Langzeitwirkung derartiger Stabilisatorsysteme entscheidend verbessern läßt.

Es wurde gefunden, daß sich Dialkylester und Alkylimide der Mercaptobernsteinsäure und der 2,3-Dimercaptobernsteinsäure mit Erfolg zur Stabilisierung von Polyvinylchlorid-Formmassen verwenden lassen. Es wurde insbesondere festgestellt, daß diese Mercaptoverbindungen in der Lage sind, die stabilisierende Wirkung von Primärstabilisatoren auf Basis von Seifen, aromatischen Carboxylaten und Phenolaten der Metalle Calcium, Barium, Zink und Aluminium, in nicht vorhersehbarem Maße zur erhöhen, wobei vor allem die günstige Auswirkung der Mercaptoverbindungen auf die Anfangsstabilität der Polyvinylchlorid-Formmassen hervorzuheben ist.

Gegenstand der Erfindung sind demnach stabilisierte Polyvinylchlorid-Formmassen, die mindestens auf 100 Gewichtsteile Polymerisat :

a) 0,02 bis 5 Gewichtsteile mindestens einer Verbindung der Formeln I und II,

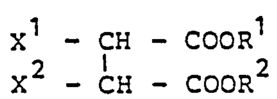

(I)

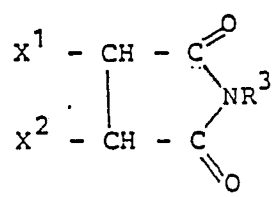

(II)

in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt und in denen $R^1$, $R^2$ und $R^3$ geradkettige oder verzweigte Alkylreste mit 5 bis 22 Kohlenstoffatomen bedeuten, als Costabilisatoren,

b) 0,05 bis 5 Gewichtsteile Primärstabilisatoren ausgewählt aus der aus Metallseifen, aromatischen Metallcarboxylaten und Metallphenolaten bestehenden Gruppe,

c) 0,2 bis 5 Gewichtsteile eines synthetischen, kristallinen, 13 bis 25 Gewichtsprozent gebundenes Wasser enthaltenden feinteiligen Natriumalumosilikats, das — bezogen auf die wasserfreie Form — die Zusammensetzung 0,7 bis 1,1 $Na_2O \cdot Al_2O_3 \cdot$ 1,3-2,4 $SiO_2$ hat,

d) übliche Gleitmittel und andere übliche Verarbeitungshilfsmittel enthalten.

In bevorzugten Ausführungsformen enthalten die Polyvinylchlorid-Formmassen bzw. die Stabilisatorkombinationen Verbindungen der Formeln I und II, in denen $R^1$, $R^2$ und $R^3$ geradkettige Alkylreste mit

6 bis 13 Kohlenstoffatomen bedeuten.

Die Verbindungen der Formeln I und II stellen bekannte Substanzen dar, die nach gängigen Methoden der organischen Synthese erhalten werden können.

Die durch die Formel I definierten Dialkylester der Mercaptobernsteinsäure und der 2,3-Dimercaptobernsteinsäure werden zweckmäßigerweise durch Veresterung der mercaptosubstituierten Bernsteinsäuren mit geradkettigen und verzweigten Alkanolen mit 5 bis 22 Kohlenstoffatomen, gegebenenfalls in Gegenwart von Veresterungskatalysatoren nach den für die Veresterung von Carbonsäuren mit Alkoholen üblichen Verfahren (siehe hierzu beispielsweise Houben-Weyl : Methoden der organischen Chemie, 4. Auflage, Band 8, Stuttgart 1952, Seiten 516-528) hergestellt. Ein geeignetes Herstellverfahren ist im experimentellen Teil beschrieben.

Geeignete Alkohole für die Herstellung der Verbindungen der Formel I sind beispielsweise n-Pentanol, n-Hexanol, n-Octanol, n-Decanol, n-Undecanol, n-Dodecanol, n-Tetradecanol, n-Hexadecanol, n-Octadecanol, n-Eikosanol, n-Dokosanol, 2-Ethylhexanol, 2-Hexyldecanol und 2-Octyldodecanol.

Die durch die Formel II definierten N-Alkylimide der Mercaptobernsteinsäure und der 2,3-Dimercaptobernsteinsäure können beispielsweise durch Umsetzung der mercaptosubstituierten Bernsteinsäuren, ihrer Ester oder Anhydride mit entsprechenden Alkylaminen erhalten werden. Bezüglich der dabei einzuhaltenden Bedingungen wird auf Houben-Weyl : Methoden der organischen Chemie, 4. Auflage, Band 11/2, Stuttgart 1958, Seiten 4-9 und Seiten 20-25 sowie auf Methodicum Chimicum, Band 6, Stuttgart 1975, Seiten 681-682. verwiesen. Ein geeignetes Verfahren zur Herstellung der mercaptosubstituierten Succinimide der Formel II ist im experimentellen Teil beschrieben.

Geeignete Alkylamine für die Herstellung der Verbindungen der Formel II sind beispielsweise n-Pentylamin, n-Hexylamin, n-Octylamin, n-Decylamin, n-Dodecylamin, n-Tetradecylamin, n-Hexadecylamin, n-Octadecylamin, n-Eikosylamin, n-Dokosylamin, 2-Ethylhexylamin, 2-Hexyldecylamin und 2-Octyldecylamin.

Unter Metallseifen werden im Zusammenhang mit der Erfindung fettsaure Salze des Calciums, Bariums, Zinks und Aluminiums verstanden. Diese Metallseifen leiten sich vorzugsweise von Fettsäuren mit 8 bis 36 Kohlenstoffatomen ab. Die Fettsäurekomponente kann dabei insbesondere aus Capryl-, Caprin-, Laurin-, Myristin-, Palmitin-, Stearin- und Behensäure bestehen. Darüber hinaus kommen verzweigtkettige Fettsäuren wie 2-Ethylhexansäure, 2-Hexyldecansäure, 2-Octyldodecansäure, 2-Dodecylhexadecansäure, 2-Tetradecyloctadecansäure und 2-Hexadecyleicosansäure und Hydroxyfettsäuren, beispielsweise 9, (10)-Hydroxystearinsäure und 9,10-Dihydroxystearinsäure, in Betracht. Die erfindungsgemäßen Zusammensetzungen können sowohl Salze einzelner Fettsäuren als auch Salze von Fettsäuregemischen enthalten, wie sie aus natürlichen Fetten und Ölen gewonnen werden.

Als aromatische Metallcarboxylate kommen vor allem die Calcium-, Barium-, Zink- und Aluminiumsalze der Benzoesäure und substituierter Benzoesäuren, insbesondere alkylsubstituierter Benzoesäuren, in Betracht.

Als Metallphenolate kommen die Phenolate, Alkylphenolate und Naphthenate des Calciums, Bariums, Zinks und Aluminiums in Betracht. Auch sogenannte überbasische Phenolate oder Naphthenate sind brauchbare Zusätze.

In einer speziellen Ausführungsform der Erfindung enthalten die Polyvinylchlorid-Formmassen auf 100 Gewichtsteile Polymerisat 0,1 bis 3 Gewichtsteile Calciumseife und/oder 0,1 bis 3 Gewichtsteile Bariumseife und/oder 0,1 bis 3 Gewichtsteile Zinkseife, wobei sich die Seifen vorzugsweise von Fettsäuren mit 8 bis 22 Kohlenstoffatomen ableiten und der Gesamtanteil der Metallseifen normalerweise 3 Gewichtsteile pro 100 Gewichtsteile Polymerisat nicht übersteigt.

Bei den oben definierten Natriumalumosilikaten handelt es sich um Zeolithe vom Typ NaA, die einen durchschnittlich wirksamen Porendurchmesser von 4 Å besitzen, weshalb sie auch als Zeolithe 4 A bezeichnet werden. Die Verwendung dieser Zeolithe als Hilfsmittel bei der Verarbeitung von Thermoplasten ist bekannt, siehe beispielsweise US-PS 4 000 100 und EP-A-0027 588.

In einer bevorzugten Ausführungsform der Erfindung kommen synthetische Zeolithe des oben beschriebenen Typs zum Einsatz, in denen ein Teil der vorhandenen Natriumionen durch Calciumionen ersetzt ist. Dabei können Zeolithe zum Einsatz kommen, in denen die ursprünglich vorhandenen Natriumionen bis zu etwa 75 Molprozent gegen Calciumionen ausgetauscht sind. Solche gemischten Natrium-/Calciumalumosilikate können in einfacher Weise aus Natriumalumosilikaten vom Typ NaA durch mehrmalige Gleichgewichtseinstellung mit Calciumchloridlösung, vorzugsweise bei erhöhter Temperatur, erhalten werden. Die gemischten Natrium-/Calciumalumosilikate werden vorzugsweise im Gemisch mit Natriumalumosilikaten vom Typ NaA eingesetzt.

Neben den genannten Zusätzen können die erfindungsgemäßen Polyvinylchlorid-Formmassen Partialester aus Polyolen mit 2 bis 6 Kohlenstoffatomen und 2 bis 6 Hydroxylgruppen und Fettsäuren mit 8 bis 22 Kohlenstoffatomen als Gleitmittel mit stabilisierender Wirkung enthalten. Diese Partialester besitzen pro Molekül im Durchschnitt mindestens eine freie Polyol-Hydroxylgruppe und können durch Veresterung entsprechender Polyole mit Fettsäuren der angegebenen Kettenlänge — gegenbenenfalls in Gegenwart von üblichen Veresterungskatalysatoren — hergestellt werden. Polyole und Fettsäuren werden dabei im Molverhältnis 1 : 1 bis 1 : (n-1) miteinander umgesetzt, wobei n die Anzahl der Hydroxylgruppen des Polyols bedeutet. Vorzugsweise setzt man die Komponenten in solchen Mengen ein, daß sich Partialester mit einer OH-Zahl zwischen 140 und 580, insbesondere zwischen 170 und 540

bilden. Das Reaktionsprodukt, das jeweils ein Estergemisch darstellt, soll eine Säurezahl unter 15, vorzugsweise unter 8, haben. Geeignete Polyolkomponenten sind Ethylenglykol, Propylenglykol-1,2, Propylenglykol-1,3, Butylenglykol-1,2, Butylenglykol-1,4, Hexandiol-1,6, Neopentylglykol, Trimethylolethan, Erythrit, Mannit und Sorbit, sowie insbesondere Glycerin, Trimethylolpropan, Ditrimethylolpropan, Pentaerythrit und Dipentaerythrit. Als geeignete Fettsäurekomponenten seien beispielsweise Capryl-, Caprin-, Laurin-, Myristin-, Palmitin-, Stearin- und Behensäure genannt. Es können auch synthetische Fettsäuren der erwähnten Kohlenstoffzahl oder ungesättigte Fettsäuren, wie Ölsäure und Linolensäure, oder auch substituierte Fettsäuren, insbesondere hydroxylierte Säuren wie 12-Hydroxystearinsäure eingesetzt werden. Aus praktischen Gründen setzt man zumeist Gemische von Fettsäuren ein, wie sie aus natürlichen Fetten und Ölen gewonnen werden.

Die erfindungsgemäßen Polyvinylchlorid-Formmassen enthalten die Polyolpartialester in der Regel in Mengen von 0,2 bis 2,0 Gewichtsteilen auf 100 Gewichtsteile Polymerisat.

Die erfindungsgemäßen Polyvinylchlorid-Formmassen können weitere Hilfsstoffe und Verarbeitungshilfsmittel enthalten, beispielsweise wachsartige Kohlenwasserstoffe wie Paraffine mit einem Erstarrungspunkt im Bereich von 45 bis 90 °C und/oder niedermolekulare Polyethylensorten, deren Erweichungspunkt unterhalb von 140 °C liegen soll. Zweckmäßigerweise werden diese wachsartigen Substanzen mit freien Fettsäuren kombiniert, wobei Fettsäuren mit 12 bis 22 Kohlenstoffatomen, wie sie aus natürlichen Fetten und Ölen zugänglich sind, bevorzugt werden. Besonders günstige Ergebnisse werden mit Palmitin- und Stearinsäure erhalten. Auch handelsübliche Fettalkohole mit 12 bis 22 Kohlenstoffatomen können in den erfindungsgemäßen thermoplastischen Formmassen enthalten sein.

Als weitere Additive kommen bestimmte Polymerisate in Betracht, beispielsweise solche auf Basis von Methylmethacrylat, Methylmethacrylat/Butylacrylat, Ethylacrylat, Methylmethacrylat/Acrylsäure und Butylmethacrylat/Styrol.

Derartige Polymerisate und Copolymerisate werden als flow promoter bezeichnet. Polymerisate aus Butylacrylat wirken bei der formgebenden Verarbeitung von Polyvinylchlorid-Formmassen auch als Trennmittel.

In bestimmten Fällen kann es von Vorteil sein, wenn die erfindungsgemäßen Polyvinylchlorid-Formmassen Antioydationsmittel enthalten. Hier kommen beispielsweise Diphenylolpropan, 2,5-Bis-(1,1-dimethylpropyl)-hydrochinon, 2,6-Di-tert.-butyl-4-methylphenol, Octadecyl-(3,5-Di-tert.-butyl-4-hydroxyphenyl)-propionat, 1,1,3-Tris-(5-tert.-butyl-4-hydroxy-2-methylphenyl)-butan oder Dilaurylthiodipropionat in Betracht.

Polyvinylchlorid-Formmassen, die für die Herstellung von Hohlkörpern und Folien bestimmt sind, können auf 100 Gewichtsteile Polymerisat 0,5 bis 5 Gewichtsteile epoxydiertes Sojaöl und 0,1 bis 0,8 Gewichtsteile höhermolekulares Esterwachs enthalten. Als hochmolekulare Esterwachse kommen Montanwachse, Paraffinoxydate und Komplexester in Betracht.

Die Basis der erfindungsgemäßen stabilisierten thermoplastischen Formmassen besteht aus Homopolymerisaten oder Mischpolymerisaten des Vinylchlorids. Die Mischpolymerisate enthalten wenigstens 50 Molprozent, vorzugsweise wenigstens 80 Molprozent Vinylchlorid. Die Polymerisate können auf beliebigem Wege, beispielsweise durch Suspensions-, Emulsions- oder Blockpolymerisation hergestellt worden sein. Ihr K-Wert kann zwischen etwa 35 und 80 liegen. In den Rahmen der Erfindung fallen auch Formmassen auf Basis von nachchloriertem Polyvinylchlorid sowie solche auf Basis von Harzgemischen, die überwiegend Homopolymerisate oder Copolymerisate des Vinylchlorids enthalten. Der Begriff Polyvinylchlorid-Formmassen erfaßt erfindungsgemäß sowohl die zur Verformung bestimmten Halbfertigprodukte als auch aus diesen Massen beliebig geformte Artikel.

Die einzelnen Komponenten der erfindungsgemäßen Polyvinylchlorid-Formmassen können durch Vermischen der Bestandteile in konventionellen Mischern vereinigt werden. Es ist dabei möglich, zunächst die verschiedenen Komponenten der Stabilisatorkombination miteinander zu vermischen und dieses Gemisch dann mit dem Polyvinylchlorid-Basis-material zu vereinigen.

Die erfindungsgemäßen Stabilisatorkombinationen für Polyvinylchlorid-Formmassen bestehen im einfachsten Fall aus

a) 1 Gewichtsteil mindestens einer Verbindung der Formeln I und II

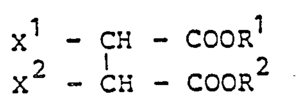

(I)

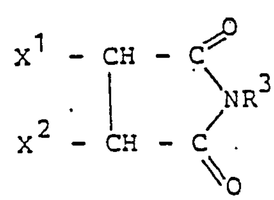

(II)

in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt und in denen $R^1$, $R^2$ und $R^3$

geradkettige oder verzweigte Alkylreste mit 5 bis 22 Kohlenstoffatomen bedeuten, als Costabilisatoren,

b) 0,5 bis 30 Gewichtsteile Primärstabilisatoren ausgewählt aus der Gruppe bestehend aus Metallseifen, aromatischen Metallcarboxylaten und Metallphenolaten,

c) 0,2 bis 20 Gewichtsteile eines synthetischen, kristallinen, 13 bis 25 Gewichtsprozent gebundenes Wasser enthaltenden, feinteiligen Natriumalumosilikats, das — bezogen auf die wasserfreie Form — die Zusammensetzung 0,7 bis 1,1 $Na_2O \cdot Al_2O_3 \cdot 1{,}3\text{-}2{,}4\ SiO_2$ hat.

Als weitere Bestandteile können die erfindungsgemäßen Stabilisatorkombinationen übliche Gleitmittel und andere übliche Verarbeitungshilfsmittel enthalten.

Eine spezielle Ausführungsform der Erfindung sicht Stabilisatorkombinationen vor, in denen auf 1 Gewichtsteil der Verbindungen der Formeln I und II 0,5 bis 10 Gewichtsteile Calciumseifen und/oder 0,5 bis 10 Gewichtsteile Bariumseifen und/oder 0,5 bis 10 Gewichtsteile Zinkseifen vorhanden sind, wobei sich die Seifen von Fettsäuren mit 8 bis 22 Kohlenstoffatomen ableiten. Der Gesamtanteil der genannten Metallseifen soll dabei 20 Gewichtsteile pro 1 Gewichtsteil Verbindungen der Formeln I und II nicht überschreiten.

Bevorzugt enthalten die Stabilisatorkombinationen wenigstens ein Gleitmittel aus der Gruppe der oben definierten Partialester aus Fettsäuren und Polyolen. Dabei kann der Partialester in Mengen von 0,2 bis 5 Gewichtsteile auf 1 Gewichtsteil Verbindungen der Formeln I und II vorhanden sein.

Die erfindungsgemäßen Stabilisatorkombinationen können gewünschtenfalls durch weitere Hilfsstoffe und Verarbeitungshilfsmittel für Polyvinylchlorid-Formmassen ergänzt werden.

Die Stabilisatorkombinationen können durch einfaches mechanisches Vermischen der Bestandteile mit Hilfe von konventionellen Mischern erhalten werden. Bei der Herstellung fallen sie im allgemeinen als rieselfähige, nichtstaubende Produkte an.

## Beispiele

### Herstellung der Mercaptobernsteinsäuredialkylester

Eine Suspension von 500 g (3,3 Mol) Mercaptobernsteinsäure und 15 g Natriumhydrogensulfatmonohydrat in 1 043 g (6,6 Mol) n-Decanol wurde unter Rühren auf 70 °C erwärmt und 50 Minuten lang auf dieser Temperatur gehalten. Das entstehende Wasser wurde durch Anlegen eines schwachen Vakuums (etwa 40 mbar) entfernt. Anschließend wurde die Innentemperatur im Verlauf einer Stunde auf 80 °C erhöht und die Mischung solange weitergerührt, bis die Wasserentwicklung (nach etwa 2 Stunden) beendet war. Das erhaltene Produkt wurde auf Raumtemperatur abgekühlt und über 30 g Kieselgur filtriert. Das Filtrat wurde durch Erhitzen auf ca. 80 °C im Ölpumpenvakuum (ca. 0,4 mbar) im Verlauf von etwa 2 Stunden von Resten flüchtiger Bestandteile befreit und nach dem Abkühlen nochmals in der Kälte über 30 g Kieselgur filtriert. Es wurden 1 334 g (44 % d. Th.) Mercaptobernsteinsäuredi-n-decylester mit $N_D^{25} = 1{,}4610$ erhalten.

Unter Verwendung von n-Hexanol und n-Octadecanol anstelle von Decanol wurde Mercaptobernsteinsäure-n-hexylester und Mercaptobernsteinsäuredi-n-octadecylester erhalten. 2,3-Dimercaptobernsteinsäuredi-n-hexylester wurde in analoger Weise aus 2,3-Dimercaptobernsteinsäure und n-Hexanol hergestellt.

### Herstellung eines Mercaptobernsteinsäurealkylimids

In einem Dreihalskolben mit Rührer, Rückflußkühler und Wasserabscheider wurden 40 g (0,264 Mol) Mercaptobernsteinsäure mit 41,5 g (0,264 Mol) n-Decylamin in 200 ml Mesitylen in Gegenwart von 5 g eines Sulfonsäuregruppen enthaltenden Ionenaustauscherharzes (Levatit(R) S 100 ; Hersteller Bayer AG, Leverkusen) unter Rühren solange zum Rückflußkochen erhitzt, bis sich die bei der Imidbildung zu erwartende Menge Reaktionswasser (ca. 9 ml) abgeschieden hatte. Aus dem abgekühlten Reaktionsgemisch wurde der Katalysator durch Filtration entfernt. Nach dem Abdestillieren des Lösungsmittels aus dem Filtrat verblieben 68,4 g N-n-Decylmercaptosuccinimid als schwach gelb gefärbte, klare, viskose Flüssigkeit.

### Herstellung und Prüfung der Walzfelle

In den Beispielen 1 bis 3 wurde die Wirkung der Stabilisatorkombinationen anhand der « statischen Thermostabilität » von Walzfellen geprüft. Zu diesem Zweck wurden Stabilisatorgemische enthaltende Polyvinylchloridformmassen auf einem Laborwalzwerk der Abmessung 350 × 150 mm (Fa. Schwabenthan) bei einer Walzentemperatur von 170 °C und einer Walzendrehzahl von 30 Upm im Gleichlauf im Verlauf von 5 Minuten zu Prüffellen verarbeitet. Die circa 0,5 mm dicken Felle wurden zu quadratischen Probestücken mit 10 mm Kantenlänge zerschnitten, die anschließend in einem Trockenschrank mit 6 rotierenden Horden (Heraeus FT 420 R) einer Temperatur von 180 °C ausgesetzt wurden. Im Abstand von 10 Minuten wurden Proben entnommen und deren Farbveränderung begutachtet.

In den nachfolgenden Tabellen I und II ist in Abhängigkeit von der Zusammensetzung der jeweiligen Polyvinylchlorid-Formmasse zunächst die Prüfzeit angegeben, nach der die erste Verfärbung der

Probestücke beobachtet wurde, und dann der Zeitraum, nachdem der Test wegen zu starker Verfärbung (Stabilitätsabbruch) beendet wurde. Wenn für die erste Verfärbung der Wert 0 angegeben ist, so bedeutet dies, daß bereits bei der Herstellung der Walzfelle eine Verfärbung eintrat.

Beispiel 1

Die thermoplastische Formmasse A (Vergleichszusammensetzung) wurde durch mechanisches Vermischen von

100 GT Suspensions-PVC (K-Wert 70 ; Vestolit(R) S 7054 ; Hersteller : Chemische Werke Hüls AG, Marl)
0,2 GT Stearinsäure
0,2 GT Paraffin, Smp. 71 °C
0,5 GT Pentaerythritester der Stearinsäure (Molverhältnis 1 : 1,5 ; OH-Zahl 212)
(GT = Gewichtsteile) mit einer Stabilisatorkombination A' aus
1,0 GT Calciumstearat
0,5 GT Zinkstearat

erhalten. Für die Herstellung der erfindungsgemäßen Polyvinylchlorid-Formmassen B bis F wurde die Stabilisatormischung A' zu den Kombinationen B' bis F' durch folgende Zusätze abgewandelt :

In B' : 0,5 GT 2,3-Dimercaptobernsteinsäuredi-n-hexylester.
In C' : 0,5 GT Mercaptobernsteinsäuredi-n-decylester.
In D' : 0,5 GT Mercaptobernsteinsäuredi-n-octadecylester.
In E' : 0,5 GT N-n-Decylmercaptosuccinimid.
In F' : 0,5 GT Mercaptobernsteinsäuredi-n-decylester.
1,0 GT Natriumalumosilikat.

In der Stabilisatorkombination F' wurde als Natriumalumosilikat ein feinteiliger, kristalliner, synthetischer Zeolith NaA mit dem Molverhältnis $Na_2O : Al_2O_3 : SiO_2 = 0,9 : 1 : 2,04$, Wassergehalt 19 Gewichtsprozent, eingesetzt.

Die Zusammensetzungen der auf diese Weise erhaltenen stabilisierten Polyvinylchlorid-Formmassen A bis F können der nachstehenden Tabelle I entnommen werden.

Die Formmassen A bis F wurden nach der oben beschriebenen Methode auf ihre statische Thermostabilität geprüft. Die dabei gefundenen Ergebnisse sind im unteren Teil der Tabelle I wiedergegeben.

(Siehe Tabelle I Seite 7 f.)

Tabelle 1

| Bestandteil (GT) | Polyvinylchlorid-Formmassen | | | | | |
|---|---|---|---|---|---|---|
| | A | B | C | D | E | F |
| Suspensions-PVC | 100 | 100 | 100 | 100 | 100 | 100 |
| Stearinsäuré | 0,2 | 0,2 | 0,2 | 0,2 | 0,2 | 0,2 |
| Paraffin | 0,2 | 0,2 | 0,2 | 0,2 | 0,2 | 0,2 |
| Pentaerythritstearinsäureester | 0,5 | 0,5 | 0,5 | 0,5 | 0,5 | 0,5 |
| Zinkstearat | 0,5 | 0,5 | 0,5 | 0,5 | 0,5 | 0,5 |
| Calciumstearat | 1,0 | 1,0 | 1,0 | 1,0 | 1,0 | 1,0 |
| Natriumalumosilikat | - | - | - | - | - | 1,0 |
| 2,3-Dimercaptobernsteinsäuredi-n-hexylester | - | 0,5 | - | - | - | - |
| Mercaptobernsteinsäuredi-n-decylester | - | - | 0,5 | - | - | 0,5 |
| Mercaptobernsteinsäuredi-n--octadecylester | - | - | - | 0,5 | - | - |
| N-n-Decylmercaptosuccinimid | - | - | - | - | 0,5 | - |
| erste Verfärbung (min) | 0 | 20 | 30 | 30 | 30 | 40 |
| Stabilitätsabbruch | 40 | 50 | 60 | 60 | 60 | 100 |

Beispiel 2

Eine thermoplastische Formmasse der Zusammensetzung

100 GT Suspensions-PVC (K-Wert 70 ; Vestolit® S 7054 ; Hersteller : Chemische Werke Hüls AG, Marl)
0,2 GT Stearinsäure
0,2 GT Paraffin, Smp. 71 °C
0,5 GT Pentaerythritester der Stearinsäure (Molverhältnis 1 : 1,5 ; OH-Zahl 212)
0,5 GT Zinkstearat

wurde durch stabilisierende Zusätze zu den Polyvinylchlorid-Formmassen G bis L abgewandelt. Im einzelnen wurden auf 100 GT des Polymeren zusätzlich eingearbeitet :

In G : 1,0 GT Calciumstearat.
In H : 1,0 GT Calciumstearat,
0,5 GT Mercaptobernsteinsäuredi-n-decylester.
In I : 2,0 GT Natriumalumosilikat.
In J : 2,0 GT Natriumalumosilikat,
0,5 GT Mercaptobernsteinsäuredi-n-decylester.
In K : 2,0 GT Na/Ca-Zeolith.
In L : 1,0 GT Natriumalumosilikat,
2,0 GT Na/Ca-Zeolith,
0,5 Gt Mercaptobernsteinsäuredi-n-decylester.

In die Formmassen I, J und L wurde als Natriumalumosilikat ein feinteiliger, kristalliner, synthetischer Zeolith NaA mit dem Molverhältnis $Na_2O : Al_2O_3 : SiO_2 = 0,9 : 1 : 2,04$ und einem Wassergehalt von 19 Gewichtsprozent eingesetzt.

Der in den Formmassen K und L verwendete Na/Ca-Zeolith hatte die Zusammensetzung (in Gewichtsprozent) : 13 % CaO ; 3,7 % $Na_2O$ ; 29,0 % $Al_2O_3$ ; 34,1 % $SiO_2$ ; 19,8 % $H_2O$. Es handelt sich dabei um einen Zeolith NaA, in dem die Natriumionen durch mehrmaliges Äquilibrieren mit 15 bzw. 7,5 gewichtsprozentigen Calciumchloridlösungen bei 80 °C zum Teil durch Calciumionen ersetzt worden waren.

Die Zusammensetzungen der erhaltenen stabilisierten Polyvinylchlorid-Formmassen G bis L sind in der nachstehenden Tabelle II angegeben. Bei den Polyvinylchlorid-Formmassen G, I und K handelt es sich um Vergleichszusammensetzungen.

Die Formmassen G bis L wurden nach der oben beschriebenen Methode auf ihre statische Thermostabilität geprüft. Die gefundenen Prüfungsergebnisse sind im unteren Teil der Tabelle II wiedergegeben.

(Siehe Tabelle II Seite 9 f.)

Tabelle 2

| Bestandteil (GT) | Polyvinylchlorid-Formmassen | | | | | |
|---|---|---|---|---|---|---|
| | G | H | I | J | K | L |
| Suspensions-PVC | 100 | 100 | 100 | 100 | 100 | 100 |
| Stearinsäure | 0,2 | 0,2 | 0,2 | 0,2 | 0,2 | 0,2 |
| Paraffin | 0,2 | 0,2 | 0,2 | 0,2 | 0,2 | 0,2 |
| Pentaerythritstearinsäureester | 0,5 | 0,5 | 0,5 | 0,5 | 0,5 | 0,5 |
| Zinkstearat | 0,5 | 0,5 | 0,5 | 0,5 | 0,5 | 0,5 |
| Calciumstearat | 1,0 | 1,0 | - | - | - | - |
| Na-Zeolith | - | - | 2,0 | 2,0 | - | 1,0 |
| Na/Ca-Zeolith | - | - | -- | - | 2,0 | 2,0 |
| Mercaptobernsteinsäuredi-n-decylester | - | 0,5 | - | 0,5 | - | 0,5 |
| Erste Verfärbung (min) | 0 | 30 | 0 | 40 | 10 | 20 |
| Stabilitätsende (min) | 40 | 60 | 80 | 100 | 10 | 110 |

Beispiel 3

Durch mechanisches Vermischen der Komponenten wurde die Stabilisatorkombination M' mit folgender Zusammensetzung hergestellt :

2 GT Zinkstearat
6 GT Bariumstearat
1 GT Mercaptobernsteinsäuredi-n-decylester.

Zur Herstellung der PVC-Formmasse M wurden

100 GT Suspensions-PVC (K-Wert 70 ; Vinnol® H 70 F, Hersteller : Wacker Chemie, München)
50 GT Di-2-ethylhexylphtalat
2 GT epoxidiertes Sojaöl
0,9 GT Kombination M'

miteinander vermischt. Bei der Prüfung der erhaltenen Formmasse nach der oben angegebenen Methode trat der Stabilisatorabbruch nach 50 Minuten Prüfdauer ein.

Vergleichsversuch : Wurde in der Rezeptur der Kombination M der Mercaptobernsteinsäuredi-n-decylester weggelassen, so trat bei sonst gleicher Verfahrensweise das Stabilitätsende schon nach 40 Minuten ein.

**Patentansprüche**

1. Stabilisierte Polyvinylchlorid-Formmassen, enthaltend auf 100 Gewichtsteile Polymerisat

a) 0,02 bis 5 Gewichtsteile mindestens einer Verbindung der Formeln I und II,

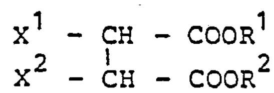

(I)

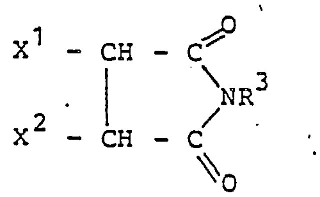

(II)

in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt und in denen $R^1$, $R^2$ und $R^3$ geradkettige oder verzweigte Alkylreste mit 5 bis 22 Kohlenstoffatomen bedeuten, als Costabilisatoren,

b) 0,05 bis 5 Gewichtsteile Primärstabilisatoren ausgewählt aus der aus Metallseifen, aromatischen Metallcarboxylaten und Metallphenolaten bestehenden Gruppe,

c) 0,2 bis 5 Gewichtsteile eines synthetischen, kristallinen, 13 bis 25 Gewichtsprozent gebundenes Wasser enthaltenden feinteiligen Natriumalumosilikats, das — bezogen auf die wasserfreie Form — die Zusammensetzung 0,7 bis 1,1 $Na_2O \cdot Al_2O_3 \cdot$ 1,3-2,4 $SiO_2$ hat,

d) übliche Gleitmittel und andere übliche Verarbeitungshilfsmittel.

2. Stabilisierte Polyvinylchlorid-Formmassen nach Anspruch 1, dadurch gekennzeichnet, daß in den Formeln I und II $R^1$, $R^2$ und $R^3$ geradkettige Alkylreste mit 6 bis 18 Kohlenstoffatomen darstellen.

3. Stabilisierte Polyvinylchlorid-Formmassen nach den Ansprüchen 1 und 2, dadurch gekennzeichnet, daß sie auf 100 Gewichtsteile Polymerisat 0,1 bis 3 Gewichtsteile Calciumseifen und/oder 0,1 bis 3 Gewichtsteile Bariumseifen und/oder 0,1 bis 3 Gewichtsteile Zinkseifen enthalten, wobei sich die Seifen von Fettsäuren mit 8 bis 22 Kohlenstoffatomen ableiten.

4. Stabilisierte Polyvinylchlorid-Formmassen nach Anspruch 1, dadurch gekennzeichnet, daß in dem Natriumalumosilikat ein Teil der Natriumionen durch Calciumionen ersetzt ist.

5. Stabilisatorkombination für Polyvinylchlorid-Formmassen enthaltend

a) 1 Gewichtsteil mindestens einer Verbindung der Formeln I und II

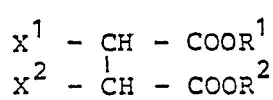

(I)

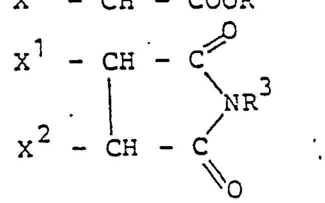

(II)

in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt, und in denen $R^1$, $R^2$ und $R^3$ geradkettige oder verzweigte Alkylreste mit 5 bis 22 Kohlenstoffatomen bedeuten, als Costabilisatoren,

b) 0,5 bis 30 Gewichtsteile Primärstabilisatoren ausgewählt aus der Gruppe bestehend aus Metallseifen, aromatischen Metallcarboxylaten und Metallphenolaten,

c) 0,2 bis 20 Gewichtsteile eines synthetischen kristallinen, 13 bis 25 Gewichtsprozent gebundenes Wasser enthaltenden, feinteiligen Natriumalumosilikats, das — bezogen auf die wasserfreie Form — die Zusammensetzung 0,7 bis 1,1 $Na_2O \cdot Al_2O_3 \cdot$ 1,3-2,4 $SiO_2$ hat,

d) gegebenenfalls übliche Gleitmittel und andere übliche Verarbeitungshilfsmittel.

6. Stabilisatorkombination nach Anspruch 5, dadurch gekennzeichnet, daß in den Formeln I und II $R^1$, $R^2$ und $R^3$ geradkettige Alkylreste mit 6 bis 18 Kohlenstoffatomen darstellen.

7. Stabilisatorkombination nach den Ansprüchen 5 und 6, dadurch gekennzeichnet, daß sie auf 1 Gewichtsteil der Verbindungen der Formeln I und II 0,5 Gewichtsteile Calciumseifen und/oder 0,5 bis 10 Gewichtsteile Calciumseifen und/oder 0,5 bis 10 Gewichtsteile Bariumseifen und/oder 0,5 bis 10 Gewichtsteile Zinkseifen enthält, wobei sich die Seifen von Fettsäuren mit 8 bis 22 Kohlenstoffatomen ableiten.

8. Stabilisatorkombination nach den Ansprüchen 5 bis 7, dadurch gekennzeichnet, daß in dem Natriumalumosilikat ein Teil der Natriumionen durch Calciumionen ersetzt ist.

## Claims

1. Stabilized polyvinylchloride molding compositions containing — to 100 parts by weight polyme

a) from 0.02 to 5 parts by weight of at least one compound corresponding to the following form

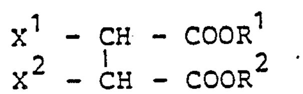

(I)

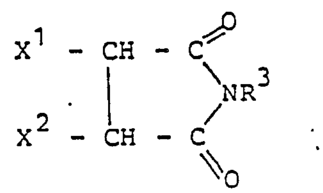

(II)

in which $X^1$ and $X^2$ independently of one another represent hydrogen or the SH-group, at least one of the substituents $X^1$ and $X^2$ being an SH-group, and $R^1$, $R^2$ and $R^3$ represent straight-chain or branched $C_5$-$C_{22}$ alkyl groups, as co-stabilizers,

b) from 0.05 to 5 parts by weight primary stabilizers selected from the group comprising metal soaps, aromatic metal carboxylates and metal phenolates,

c) from 0.2 to 5 parts by weight of a synthetic, crystalline, finely divided sodium alumosilicate which contains from 13 to 25 % by weight bound water and which, in its anhydrous form, has the composition 0.7 to 1.1 $Na_2O \cdot Al_2O_3 \cdot$ 1.3 to 2.4 $SiO_2$,

d) standard lubricants and other standard processing aids.

2. Stabilized polyvinylchloride molding compositions as claimed in Claim 1, characterized in that, in formulae I and II, $R^1$, $R^2$ and $R^3$ represent straight-chain $C_6$-$C_{18}$ alkyl groups.

3. Stabilized polyvinylchloride molding compositions as claimed in Claims 1 and 2, characterized in that they contain — to 100 parts by weight polymer — from 0.1 to 3 parts by weight calcium soaps and/or from 0.1 to 3 parts by weight barium soaps and/or from 0.1 to 3 parts by weight zinc soaps, the soaps being derived from $C_8$-$C_{22}$ fatty acids.

4. Stabilized polyvinylchloride molding compositions as claimed in Claim 1, characterized in that some of the sodium ions in the sodium alumosilicate are replaced by calcium ions.

5. A stabilizer combination for polyvinylchloride molding compositions containing

a) 1 part by weight of at least one compound corresponding to the following formulae

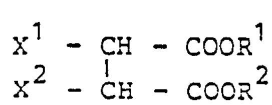

(I)

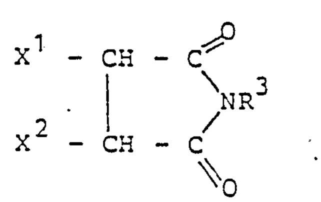

(II)

in which $X^1$ and $X^2$ independently of one another represent hydrogen or the SH group, at least one of the substituents $X^1$ and $X^2$ being an SH-group, and $R^1$, $R^2$ and $R^3$ are straight-chain or branched $C_5$-$C_{22}$ alkyl groups, as co-stabilizers,

b) from 0.5 to 30 parts by weight primary stabilizers selected from the group comprising metal soaps, aromatic metal carboxylates and metal phenolates,

c) from 0.2 to 20 parts by weight of a synthetic, crystalline finely divided sodium alumosilicate which contains from 13 to 25 % by weight bound water and which, in its anhydrous form, has the composition 0.7 to 1.1 $Na_2O \cdot Al_2O_3 \cdot$ 1.3 to 2.4 $SiO_2$,

d) optionally standard lubricants and other standard processing aids.

6. A stabilizer combination as claimed in Claim 5, characterized in that, in formulae I and II, $R^1$, $R^2$ and $R^3$ represent straight-chain $C_6$-$C_{18}$ alkyl groups.

7. A stabilizer combination as claimed in Claims 5 and 6, characterized in that, to 1 part by weight of the compounds corresponding to formulae I and II, it contains 0.5 part by weight calcium soaps and/or 0.5 to 10 parts by weight calcium soaps and/or 0.5 to 10 parts by weight barium soaps and/or 0.5 to 10 parts by weight zinc soaps, the soaps being derived from $C_8$-$C_{22}$ fatty acids.

8. A stabilizer combination as claimed in Claims 5 to 7, characterized in that some of the sodium ions in the sodium alumosilicate are replaced by calcium ions.

**Revendications**

1. Matières à mouler de chlorure de polyvinyle stabilisées contenant, pour 100 parties en poids de polymère :

a) 0,02 à 5 parties en poids d'au moins un composé répondant aux formules I et II :

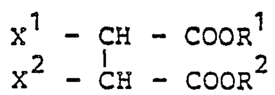

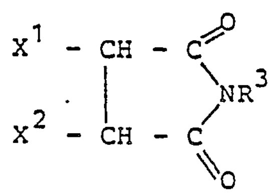

(II)

dans lesquelles $X^1$ et $X^2$ représentent chacun indépendamment l'un de l'autre un atome d'hydrogène ou le groupe SH, au moins un des substituants $X^1$ et $X^2$ représentant un groupe SH, tandis que $R^1$, $R^2$ et $R^3$ représentent des radicaux alkyle à chaîne droite ou ramifiée contenant 5 à 22 atomes de carbone, comme co-stabilisants,

b) 0,05 à 5 parties en poids de stabilisants primaires choisis parmi le groupe comprenant les savons métalliques, les phénolates métalliques et les carboxylates métalliques aromatiques,

c) 0,2 à 5 parties en poids d'un aluminosilicate de sodium synthétique, cristallin, finement divisé, contenant 13 à 25 % en poids d'eau fixée et ayant, rapporté à la forme anhydre, la composition suivante : 0,7 à 1,1 $Na_2O \cdot Al_2O_3 \cdot$ 1,3-2,4 $SiO_2$,

d) des lubrifiants habituels et d'autres agents auxiliaires habituels de traitement.

2. Matières à mouler de chlorure de polyvinyle stabilisées selon la revendication 1, caractérisées en ce que, dans les formules I et II, $R^1$, $R^2$ et $R^3$ représentent des radicaux alkyle à chaîne droite contenant 6 à 18 atomes de carbone.

3. Matières à mouler de chlorure de polyvinyle stabilisées selon les revendications 1 et 2, caractérisées en ce que, pour 100 parties en poids de polymère, elles contiennent 0,1 à 3 parties en poids de savons de calcium et/ou 0,1 à 3 parties en poids de savons de baryum et/ou 0,1 à 3 parties en poids de savons de zinc, les savons dérivant d'acides gras contenant 8 à 22 atomes de carbone.

4. Matières à mouler de chlorure de polyvinyle stabilisées selon la revendication 1, caractérisées en ce que, dans l'aluminosilicate de sodium, une partie des ions sodium est remplacée par des ions calcium.

5. Combinaison stabilisante pour matières à mouler de chlorure de polyvinyle contenant :

a) 1 partie en poids d'au moins un composé répondant aux formules I et II :

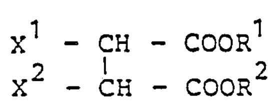

(I)

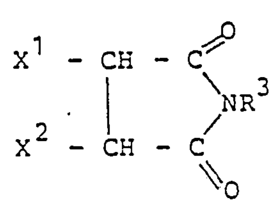

(II)

dans lesquelles $X^1$ et $X^2$ représentent chacun indépendamment l'un de l'autre un atome d'hydrogène ou le groupe SH, au moins un des substituants $X^1$ et $X^2$ représentant un groupe SH, tandis que $R^1$, $R^2$ et $R^3$ représentent des radicaux alkyle à chaîne droite ou ramifiée contenant 5 à 22 atomes de carbone, comme co-stabilisants.

b) 0,5 à 30 parties en poids de stabilisants primaires choisis parmi le groupe comprenant les savons métalliques, les phénolates métalliques et les carboxylates métalliques aromatiques,

c) 0,2 à 20 parties en poids d'un aluminosilicate de sodium synthétique, cristallin, finement divisé et contenant 13 à 25 % en poids d'eau fixée et ayant, rapporté à la forme anhydre, la composition suivante : 0,7 à 1,1 $Na_2O \cdot Al_2O_3 \cdot 1{,}3\text{-}2{,}4\ SiO_2$,

d) éventuellement des lubrifiants habituels et d'autres agents auxiliaires habituels de traitement.

6. Combinaison stabilisante selon la revendication 5, caractérisée en ce que, dans les formules I et II, $R^1$, $R^2$ et $R^3$ représentent des radicaux alkyle à chaîne droite contenant 6 à 18 atomes de carbone.

7. Combinaison stabilisante selon les revendications 5 et 6, caractérisée en ce que, pour 1 partie en poids des composés répondant aux formules I et II, elle contient 0,5 partie en poids de savons de calcium et/ou 0,5 à 10 parties en poids de savons de calcium et/ou 0,5 à 10 parties en poids de savons de baryum et/ou 0,5 à 10 parties en poids de savons de zinc, les savons dérivant d'acides gras contenant 8 à 22 atomes de carbone.

8. Combinaison stabilisante selon les revendications 5 à 7, caractérisée en ce que, dans l'aluminosilicate de sodium, une partie des ions sodium est remplacée par des ions calcium.